# EUROPEAN PATENT APPLICATION

(11) **EP 1 103 836 A1**
(43) Date of publication of application: **30.05.2001**
(21) Application number: 00120105.2
(22) Date of filing: 18.09.2000
(51) Int. Cl.: G02C 1/08, G02C 5/22

(54) **Eyeglasses frame capable of adjustably varying posture**

(30) Priority: 29.11.1999 JP 33700699
(71) Applicant: KT Optica Inc., Sabae-shi, Fukui 916-0038 (JP)
(72) Inventor: Yamamoto, Toshiyuki, Sabae-shi, Fukui-ken (JP)
(74) Representative: VOSSIUS & PARTNER

(57) **Abstract**

Disclosed is an eyeglasses frame whose front comprises upper and lower rim wires (2 and 3) having arm extensions from their outer ends, each arm extension (8a or 8b) having a coiled spring (7a or 7b), to which a leg extension (9a or 9b) is continuous. Two parallel leg extensions (9a and 9b) are combined together, and the so combined leg extensions are connected to one or the other temple (6) via an articulated joint. The yielding deformation and twisting of the coiled springs (7a and 7b) permits the automatic horizontal and vertical adjustment of the frame's posture so as to make the pair of eyeglasses fit on one's head.

## Description

The present invention relates to an eyeglasses frame permitting its opposite temples to be opened somewhat wider beyond their normal positions perpendicular to the front of the frame, and an eyeglasses frame having no broach for closing the loophole of each circular rim to fasten the lens.

Every frame structure includes essentially a front and two temples hinged to the opposite sides of the front, thereby permitting the temples to be folded on the front. Such frame structure permits the opposite temples to be applied closely to the opposite sides of one's head, thereby preventing a pair of eyeglasses from being displaced apart from the correct position. If either hinge should be loose, the pair of eyeglasses will not be stable in position on one's face.

To assure that a pair of eyeglasses be worn on one's face in a stable way, it is necessary that the opposite temples be flexible enough to be yieldingly bent, thereby fitting fixedly on the opposite sides of one's face. A person wearing a pair of eyeglasses feels often a pain or uncomfortableness on his head. In the hope of reducing such a defect, some frames use spring-biased hinges, which permit the opposite temples to be opened more or less beyond the normal (90 degree-wide) position relative to the front by allowing the spring-biased hinges to be yieldingly opened. Thus, the opposite temples are applied to the opposite sides of one's head at appropriate pressure strong enough to assure that their ends remain fixedly in correct position all the time.

Thanks to the yielding opening of the spring-biased hinges, the front frame cannot be deformed, so that the opposite lenses may be not broken or cracked. The spring-biased hinge, however, is complicated in structure, and very expensive. Also, the spring-biased hinge is apt to be damaged, and is so large that the eyeglasses may have less pleasing appearance at its articulated joints.

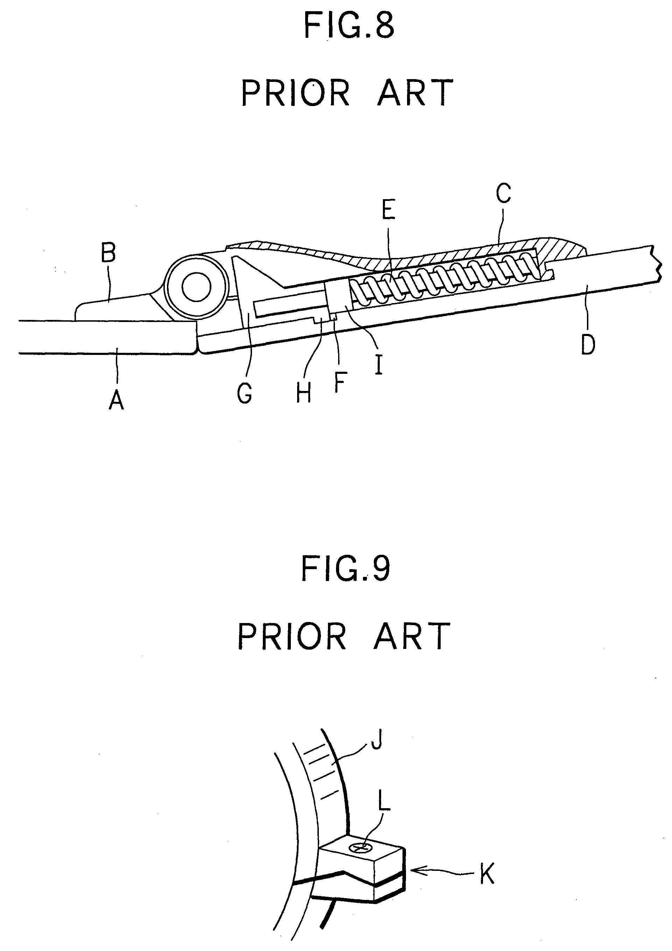

Referring to Fig.8, the spring-biased hinge has its stationary part "B" soldered to the joint piece "A" of the front. The slidable part "C" of the hinge is movably fixed to the temple "D". The slidable part "C" is permitted to move a short-distance long enough to allow the temple "D" to open wider beyond the 90 degree-wide position relative to the front. Specifically the temple "D" has a guide slot made therein, thus allowing the slidable part "C" to move in the guide slot on the temple "D". The coiled spring "E" is installed in the cavity of the slidable part "C". When the temple "D" is opened outward, the slidable part "C" is pulled toward the stationary part "B", thereby compressing the coiled spring "E". As seen from the drawing, a nail piece "G" is fixed to the lateral groove "F" with hooking its one end "H" thereto, which is made at the entrance of the cavity of the slidable part "C". The coiled spring "E" is pushed against the nail piece "G", which functions as a stopper, and then, the so compressed coiled spring "E" stores the energy with which the temple "D" is made to return to its original position.

The coiled spring-installed hinge is complicated in structure, and accordingly the manufacturing cost is very high. Still disadvantageously, such a spring-biased hinge is apt to be damaged, and once it has been damaged, it cannot be repaired with ease; the coiled spring "E" and the associated core metal "I" are pushed into the cavity of the slidable part "C" until the spring-and-core assembly has been caught by the stationary nail "G", and therefore, the nail "G" and the coiled spring "C" cannot be removed.

The counter action caused by opening the temples "D" wider than the 90 degree-wide opening can be used to make the temple ends remain fixedly in correct position on the opposite sides of one's head. The counter action has the effect of adjustably holding the pair of eyeglasses within a horizontal plane in which the opposite temples "D" are contained. In other words, the vertical adjustment cannot be made to compensate both for the difference between the levels of the opposite ears and the less-similarities of one's face relative to its center line. As a result, a person wearing a pair of eyeglasses feels unpleasantness due to the lack of the vertical adjustment of the frame. When purchasing a pair of eyeglasses in the shop, a shop assistant adjusts manually to make the pair of eyeglasses fit an individual face, but the pair of eyeglasses once adjusted is apt to fit to his face less and less after use.

Referring to Fig.9, the opposite lenses are removably fixed to the front rim "J" by closing the opposite tapped projections or broaches "K" from the loophole of the front rim "J" with screw "L". The lenses can be removed from the front rim "J" by loosening the screws "L". The fastening or removing of the opposite lenses from the front of the frame, however, is a tedious work, and the tightening of the screw is apt to cause a relatively strong stress to appear locally in the lens, thereby cracking the lens on some occasions.

In view of the above, one object of the present invention is to provide an improved eyeglasses frame which permits automatic fitness of the eyeglasses to one's face to be attained both in horizontal and vertical dimensions without using spring-biased hinges, and permits the joints of the front to be directly bolted to the outer sides of the opposite lenses.

Another object of the present invention is to provide an improved rimless frame which is capable of adjustably varying its posture vertically and horizontally to permit automatic fitness to one's face.

To attain these objects an eyeglasses frame comprising a front having a bridge for connecting two opposite lenses, and two temples foldably connected to the connections of the opposite sides of the front via associated articulated joints, is improved according to the present invention in that the front comprises upper and lower rim wires having arm extensions from their outer ends, the upper and lower arm extensions defining a space therebetween, each arm having a coiled spring, ending with a leg extension.

The upper and lower leg extensions may be integrally connected to be continuous to one or the other articulated joint or hinge, to which the temple is fixed.

Each of upper and lower rim wires may have a continuous length of arm extension, coiled spring and leg extension.

Each of upper and lower rim wires may have a continuous length of different wire integrally connected to the rim wire, the continuous length of different wire being composed of arm extension, coiled spring and leg extension.

An eyeglasses frame according to the present invention uses articulated joints such as hinges as in a conventional eyeglasses frame structure, but it has coiled springs formed in its connections to the temples. With this arrangement the coiled springs are responsive to the opening of the opposite temples beyond the 90 degree-wide opening relative to the front at their articulated joints for deforming and twisting more or less in such a way that the opposite temples may fit on one's head, applying pleasing pushes on the opposite sides of one's head to hold the eyeglasses in a stable fashion.

The upper and lower arm extensions define a variable space therebetween. When the opposite lenses are fitted in the upper and lower wire rims, the variable space is made to vary in sandwiching the lenses between the upper and lower wire rims, and the lenses are fixedly held therebetween by the counter forces appearing in the coiled springs, which are deformed and stressed somewhat.

A rimless eyeglasses frame comprising a bridge to be bolted to the inner sides of the opposite lenses and two connection pieces to be bolted to the outer sides of the opposite lenses, is improved according to the present invention in that each connection piece is a folded continuous length of wire comprising a folded wire semicircular end to be applied to the outer side of one or the other lens, two arm extensions integrally connected to the opposite lengths of the folded wire semicircle, two coiled springs integrally connected to the two arm extensions, and two leg extensions integrally connected to the two arm extensions, one or the other temple being foldably connected to the two leg extensions.

A single screw is used to fix the folded wire's semicircular end to the outer side of each lens with the coiled spring closely attached to the outer side of the lens, thereby preventing the connection piece from being inclined relative to the lens, thus assuring that either temple be free of loosening.

Other objects and advantages of the present invention will be understood from the following description of eyeglasses frame according to some preferred embodiments of the present invention, which are shown in accompanying drawings.
Fig.1a is a perspective view of an eyeglasses frame according to a first embodiment of the present invention, and Fig.1b is a side view of the eyeglasses frame;
Fig.2 is an enlarged perspective view of the connection of the frame;
Fig.3 is a perspective view of an eyeglasses frame according to a second embodiment of the present invention;
Figs.4a, 4b, 4c and 4d illustrate different rim shapes in cross-section;
Fig.5 is a perspective view of an eyeglasses frame according to a third embodiment of the present invention;
Fig.6a is a side view of a rimless frame according to one embodiment of the present invention, and Fig.6b is a front view of the same;
Fig.7a is an enlarged plane view of the connection piece of the rimless frame, and
Fig.7b is an enlarged front view of the connection piece;
Fig.8 illustrates the spring-biased hinge of a conventional frame; and
Fig.9 illustrates a broach for fastening the lens to the frame.

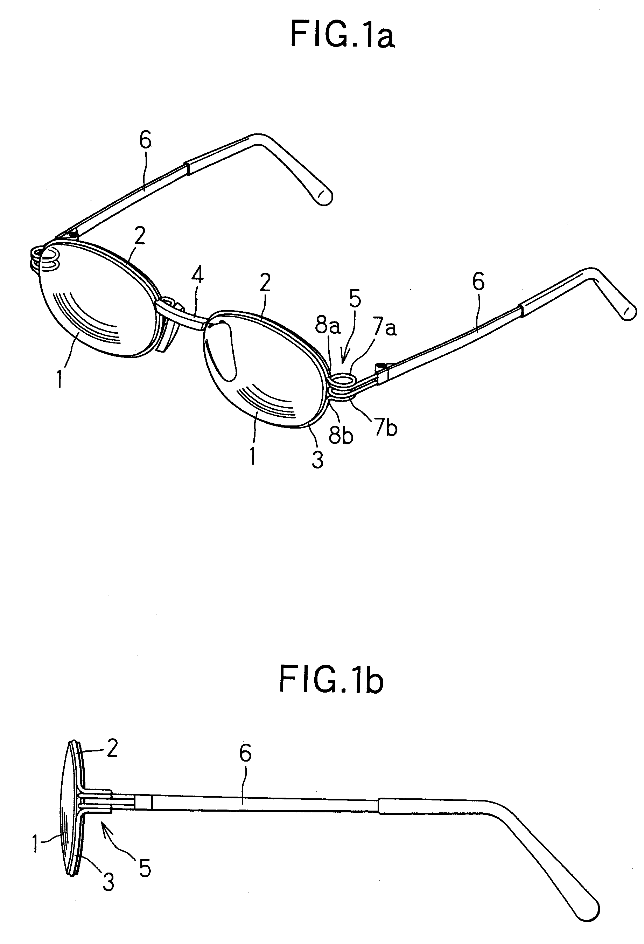

Referring to Fig.1, a pair of eyeglasses using a frame according to the first embodiment of the present invention comprises two lenses 1, upper and lower rim wires 2 and 3, a bridge 4 and two temples 6. Each lens 1 has the upper and lower rim wires 2 and 3 press-fitted in its circumference groove, and one end of each rim wire 2 or 3 is soldered to the bridge 4. The other end of each rim wire 2 or 3 is connected to one or the other temple 6 via its connection 5.

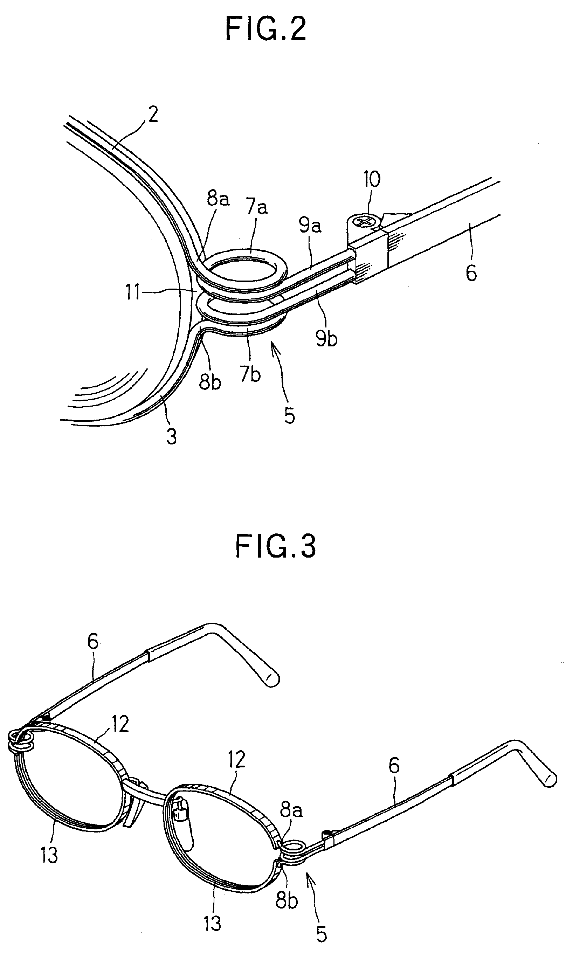

Referring to Fig.2, the other end of the rim wire 2 is formed into an arm extension 8a, and likewise, the other end of the rim wire 3 is formed into an arm extension 8b. These upper and lower arm extensions 8a and 8b define a rectangular space therebetween. Each arm extension 8a or 8b has a coiled spring 7a or 7b, ending with a leg extension 9a or 9b. Specifically the coiled spring 7a is formed at the horizontal extension of the semicircular upper rim wire 2 whereas the coiled spring 7b is formed at the horizontal extension of the semicircular lower rim wire 3. The upper and lower coiled springs 7a and 7b are vertically aligned to be paired.

The upper coiled spring 7a is integrally connected to the leg extension 9a, which extends perpendicular to the horizontal arm extension 8a. Likewise, the lower coiled spring 7b is integrally connected to the leg extension 9b, which extends perpendicular to the horizontal arm extension 8b. These upper and lower leg extensions 9a and 9b are laid side by side to be soldered together, and a temple 6 is foldably connected to the so combined leg extensions via an associated hinge 10.

Thus, each of upper and lower rim wires 2 and 3 has a continuous length of arm extension 8a or 8b, coiled spring 7a or 7b and leg extension 9a or 9b to make up a connection 5 to the temple 6. The so constructed connection 5 functions as follows:
(1) the coiled springs 7a and 7b can be so expanded in diameter as to allow each temple 6 to open wider than the 90 degree-wide position, which is limited by the associated hinge 10;
(2) the coiled springs 7a and 7b can be so twisted as to allow each temple 6 to move vertically, thereby making the temple end fit on each ear even though one ear is somewhat higher or lower than the other;
(3) the rectangular space 11 between the upper and lower arm extensions varies with the lens size, as for instance follows: a relatively large lens is pinched between the upper and lower rim wires 2 and 3 to allow the rectangular space to expand vertically, thereby causing the leg extensions 9a and 9b to be deformed more or less, and then the stress appearing in the leg extensions 9a and 9b causes the upper and lower rim wires 2 and 3 to pinch and hold the lens 1 fixedly as a counter resilient force.

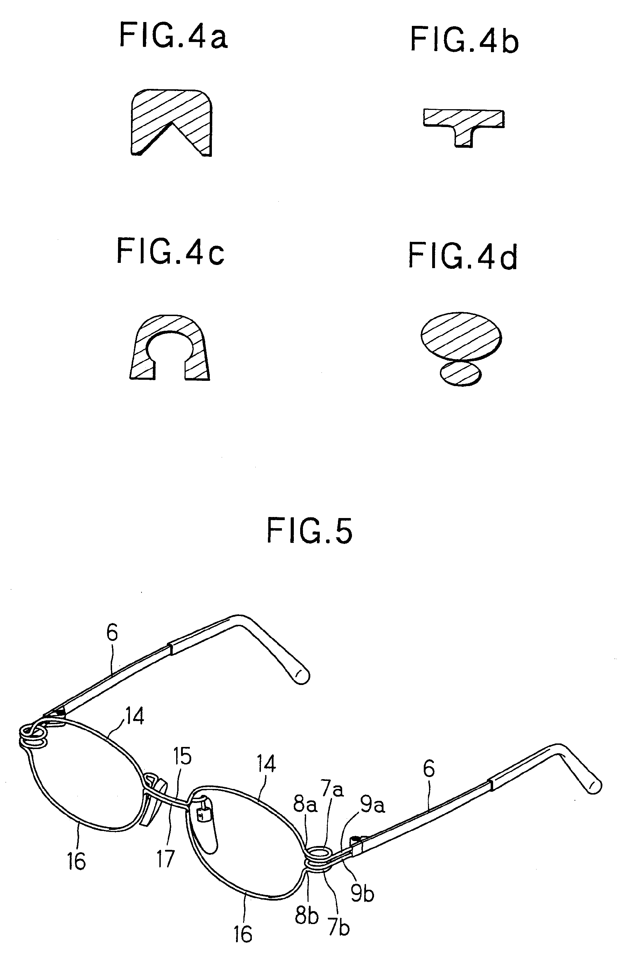

Fig.3 shows a pair of eyeglasses using a frame according to the second embodiment of the present invention. The frame uses thick upper and lower rim wires 12 and 13, to which arm extensions 8a and 8b are soldered. The arm extensions 8a and 8b are of metal different from the metal of the upper and lower rim wires 12 and 13. These upper and lower rim wires may have different shapes in cross section, as shown in Figs.4a, 4b, 4c and 4d.

Fig.5 shows an eyeglasses frame according to the third embodiment of the present invention. The frame does not use a bridge as a separate part, but the intermediate horizontal lengths 15 and 17 of the upper and lower rim wires 14 and 16 are soldered together to provide the bridge.

The upper or lower rim wire 14 or 16 has an arm extension 8a or 8b, a coiled spring 7a or 7b and a leg extension 9a or 9b formed on each end, and a temple 6 is foldably connected to the leg extension.

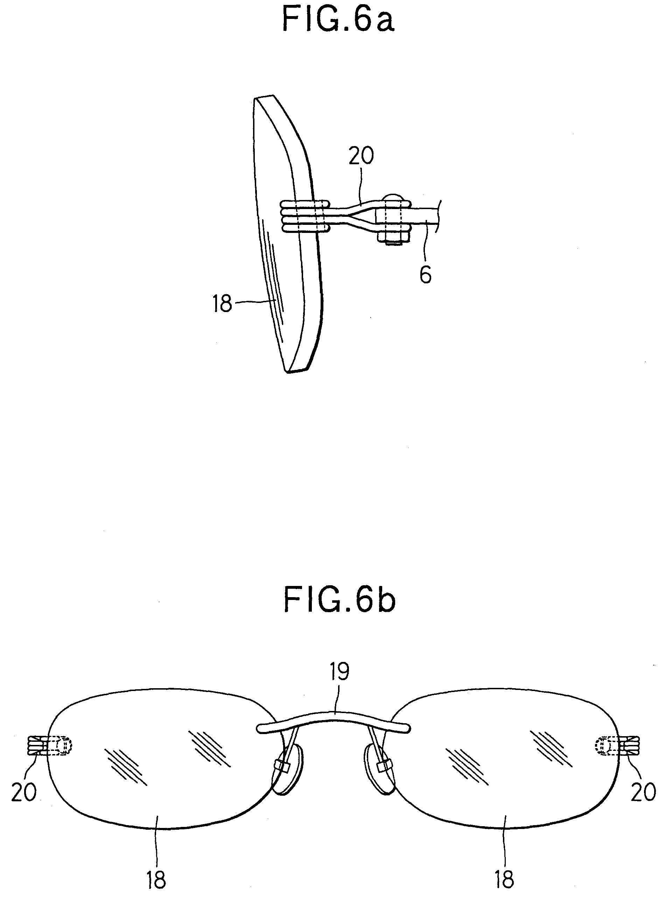

Referring to Fig.6, a pair of rimless eyeglasses using a rimless frame according to the present invention comprises a bridge 19 bolted to the inner sides of the opposite lenses 18 and 18, and two connection pieces 20 and 20 bolted to the outer sides of the opposite lenses 18 and 18. Each connection piece 20 is a folded continuous length of wire, which comprises a folded wire semicircular end to be applied to the outer side of one or the other lens 18, two arm extensions integrally connected to the opposite lengths of the folded wire semicircle, two coiled springs integrally connected to the two arm extensions, and two leg extensions integrally connected to the two arm extensions. One or the other temple 6 is foldably connected to the two leg extensions.

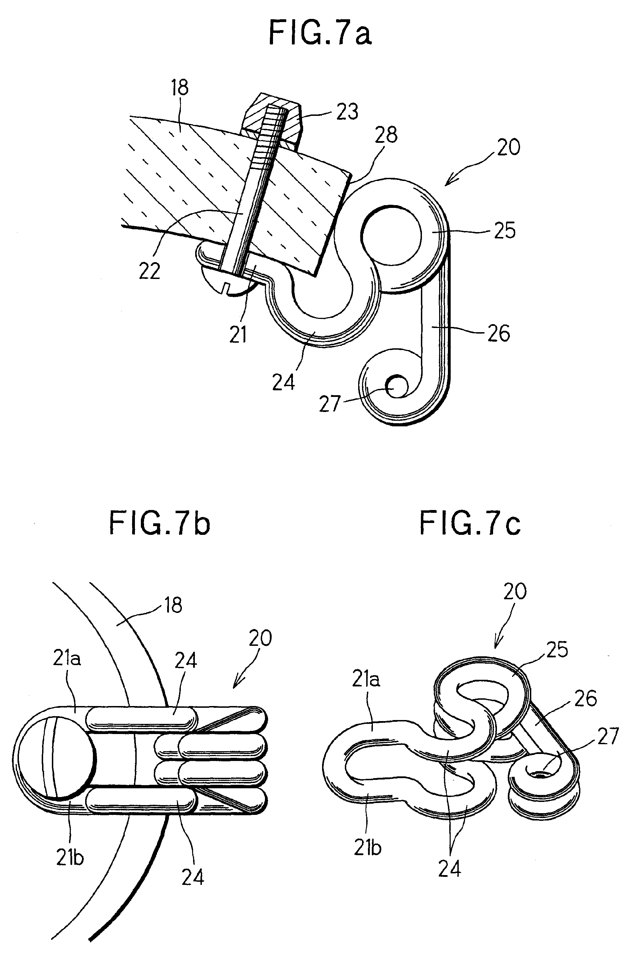

Referring to Figs.7a and 7b, the connection 20 is attached to the outer edge of one or the other lens 18. The connection 20 is a folded continuous length of wire, which comprises a folded wire semicircular end 21 a and 21 b bolted to the outer side of one or the other lens 18, two curved arm extensions 24 integrally connected to the parallel lengths of the folded wire semicircle 21 a and 21 b, two coiled springs 25 integrally connected to the two parallel curved arm extensions 24, and two parallel leg extensions 26 integrally connected to the two parallel curved arm extensions 24. Each leg extension 26 has an axle hole 27 formed at its end. An associated temple has a hole made at its end, and it can be foldably attached to the parallel leg extensions 26 by inserting an axle pin in the axle holes 27 and the hole of the temple.

As seen from these drawings, the folded wire semicircular end is closely applied to the lens to be fastened with a bolt 22 and an associated nut 23, allowing the two parallel coiled springs 25a and 25b to be put on the outer circumference 28 of the lens 18. Thus, the connection 20 cannot be loosened. The parallel curved arm extensions 24a and 24b remain apart from the outer circumference 28 of the lens 18. The bridge 19 is made of a single wire somewhat curved.

As may be understood from the above, an eyeglasses frame according to the present invention provides the following advantages:

The yielding deformation of the coiled springs permits the opening of the opposite temples wider than the 90 degree-wide opening relative to the front as is the case with a frame having opposite temples fixed to the front with spring-biased hinges, still permitting automatic vertical level-adjustment to compensate for different ear levels. Thus, the pair of eyeglasses are guaranteed to be free of deviation from the correct position on one's head.

The eyeglasses frame is simple in structure, and less expensive. It can be hardly damaged. No stress can be applied to the rims when the temples are opened wide beyond limits, and therefore, the lenses cannot be exposed to any destructive stress.

The connection has a rectangular space defined between the upper and lower arm extensions, allowing the rectangular space to vary its vertical size to allow the lens to be pinched between the upper and lower rim wires without causing any stress to be applied to the lens. Thus, the lens cannot be cracked on its circumference, and can be easily fixed to and removed from the front.

The rimless frame has its opposite connections bolted to its opposite lenses with its coiled springs closely applied to the outer circumferences of the opposite lenses. Thus, the frame cannot be loosened.

## Claims

1. An eyeglasses frame comprising a front having a bridge for connecting two opposite lenses (1), and two temples (6) foldably connected to the connections of the opposite sides of the front via associated articulated joints, characterized in that the front comprises upper and lower rim wires (2 and 3) having arm extensions (8a and 8b) from their outer ends, the upper and lower arm extensions defining a space (11) therebetween, each arm having a coiled spring (7a or 7b), ending with a leg extension (9a or 9b).

2. An eyeglasses frame according to claim 1, wherein the upper and lower leg extensions (9a and 9b) are integrally connected to be continuous to one or the other articulated joint, to which the temple (6) is fixed.

3. An eyeglasses frame according to claim 1 or 2, wherein each of upper and lower rim wires (2 and 3) has a continuous length of arm extension (8a or 8b), coiled spring (7a or 7b) and leg extension (9a or 9b).

4. An eyeglasses frame according to claim 1 or 2, wherein each of upper and lower rim wires (12 and 13) has a continuous length of different wire integrally connected to the rim wire, the continuous length of different wire being composed of arm extension (8a or 8b), coiled spring and leg extension.

5. A rimless eyeglasses frame comprising a bridge (19) to be bolted to the inner sides of the opposite lenses (18) and two connection pieces (20) to be bolted to the outer sides of the opposite lenses, wherein each connection piece (20) is a folded continuous length of wire comprising a folded wire semicircular end (21 a and 21 b) to be applied to the outer side of one or the other lens, two arm extensions (24) integrally connected to the opposite lengths of the folded wire semicircle, two coiled springs (25) integrally connected to the two arm extensions, and two leg extensions (26) integrally connected to the two arm extensions, one or the other temple (6) being foldably connected to the two leg extensions.
